# EUROPEAN PATENT SPECIFICATION

(11) **EP 2 963 455 B1**
(45) Date of publication and mention of the grant of the patent: **06.06.2018**
(21) Application number: 15175336.5
(22) Date of filing: 03.07.2015
(51) Int. Cl.: G01V 5/00

(54) **X-RAY BACKSCATTERING SAFETY INSPECTION SYSTEM HAVING DISTRIBUTED X-RAY SOURCE AND METHOD USING THE SAME**
RÖNTGENSTRAHLRÜCKSTREUUNGSSICHERHEITSINSPEKTIONSSYSTEM MIT EINER VERTEILTEN RÖNTGENQUELLE UND VERFAHREN DAMIT
SYSTÈME D'INSPECTION DE SÉCURITÉ À RÉTRODIFFUSION DE RAYONS X AYANT UNE SOURCE DE RAYONS X DISTRIBUÉE ET PROCÉDÉ UTILISANT CELUI-CI

(30) Priority: 04.07.2014 CN 201410320330
(43) Date of publication of application: 06.01.2016
(73) Proprietor: Tsinghua University, Haidian District Beijing 100084 (CN); Nuctech Company Limited, TongFang Building, Shuangqinglu, Haidian District Beijing 100084 (CN)
(72) Inventor: CHEN, Zhiqiang, 100084 Beijing (CN); ZHAO, Ziran, 100084 Beijing (CN); WU, Wanlong, 100084 Beijing (CN); JIN, Yingkang, 100084 Beijing (CN); TANG, Le, 100084 Beijing (CN); XU, Chengcong, 100084 Beijing (CN); RUAN, Ming, 100084 Beijing (CN); DING, Guangwei, 100084 Beijing (CN); WEN, Yanjie, 100084 Beijing (CN)
(74) Representative: Isarpatent

(56) References cited:
- WO-A2-2005/098400
- US-A1- 2011 019 799

## Description

### Background of the Invention

### Field of the Invention

The present disclosure relates to a field of imaging by nuclear technique, and particularly to an X-ray backscattering safety inspection system having a distributed radiation source and a method using the same.

### Description of the Related Art

A conventional X-ray safety inspection system for vehicles includes an X-ray source and a detector located at either side of a vehicle. In this system, configuration and distribution of interior materials or matters within the vehicle may be inspected based on X-ray transmission principle. The conventional system based on X-ray transmission principle presents good ability of identifying matters with medium or high density or great atomic number, but often misses matters with low density or small atomic number, such as explosive, drug, etc., because these materials have poor ability of blocking X-ray and thus the transmission image obtained has a rather poor contrast.

It is effective to inspect matters with low density or small atomic number within an object, such as contraband goods hidden in chassis or door of a vehicle, through X-ray backscattering imaging based on Compton Scattering principle on interaction between X-ray and matters.

WO 2005/098400 A2 discloses a system and method for inspecting an object with multiple sources of penetrating radiation. Irradiation of the inspection object by the sources is temporally sequenced such that the source of detected scattered radiation is unambiguous. Thus, multiple views of the inspected object may be obtained and image quality may be enhanced, even in a compact geometry in which the beams are substantially coplanar.

US 2011/0019799 A1 discloses systems and methods for scanning an object in an inspection space. The systems and methods generally incorporate spatially separated and sequenced Compton x-ray backscatter imaging techniques in a plurality of perspective planes. Such processes as time-gating detectors, weighting scintillation detections, and preferentially accepting signals that originate from a point that is substantially orthogonal to a radiation detector and at least partially shielding out signals that do not originate from a point substantially orthogonal to the detector may be used to enhance the data acquisition process. EP2725584 A2 discloses a backscattering inspection system comprising a transmit-receive module with an X-ray source comprising a plurality of individually controlled target spots and a collimator configured to generate a pencil-shaped beam at a time.

CN103063691 A discloses a backscattering inspection system comprising a transmit-receive module with an X-ray source surrounded by a rotating cylinder and coupled to vertical collimator bars to generate pencil-shaped beams.

However, the conventional safety inspection system with X-ray backscattering imaging occupies large space and collects rather less signals, thus, reveals image of an object to be inspected with a low contrast. Further, the inspection speed of the conventional safety inspection system is relatively low.

### Summary of the Invention

The present disclosure has been made to overcome or alleviate at least one aspect of the above mentioned disadvantages existing in the conventional technical solutions.

Accordingly, it is an object of the present disclosure to provide an X-ray backscattering safety inspection system having a distributed X-ray source, which advantageously reduces installation space and also improves uniformity and clarity of scanning image. Further, this safety inspection system is designed to scan an object by using double X-ray beams or multiple X-ray beams along a vertical direction simultaneously, largely increasing the backscattering inspection speed.

The invention provides an X-ray backscattering safety inspection system, as defined in independent claim 1.

In a second aspect, there is provided an X-ray backscattering safety inspection method, comprising: inspecting an object to be inspected by using the above mentioned system.

### Brief Description of the Drawings

Figure 1 is a schematic top view of an X-ray backscattering safety inspection system according to an embodiment of the present disclosure;
Figure 2 is a schematic perspective view of an X-ray backscattering safety inspection system according to an embodiment of the present disclosure; and
Figure 3 is a schematic view of an X-ray backscattering safety inspection system having four transmit-receive modules according to an embodiment of the present disclosure.

### Detailed Description of the Preferred Embodiment

Exemplary embodiments of the present disclosure will be described hereinafter in detail with reference to the attached drawings, wherein the like reference numerals refer to the like elements. The present disclosure may, however, be embodied in many different forms and should not be construed as being limited to the embodiment set forth herein; rather, these embodiments are provided so that the present disclosure will be thorough and complete, and will fully convey the concept of the disclosure to those skilled in the art.

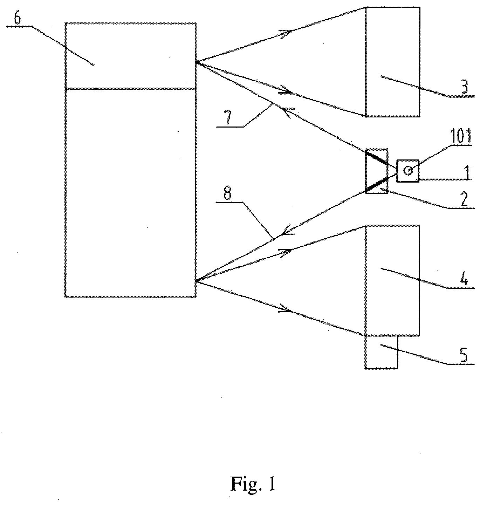

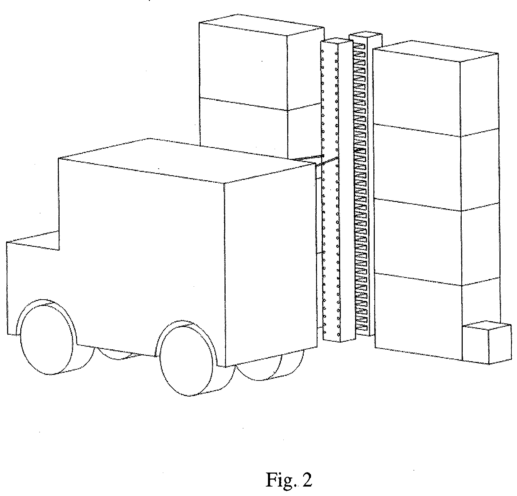

According to an embodiment of the present disclosure, there is provided an X-ray backscattering safety inspection system, which includes an X-ray source 3, detectors 3 and 4, and collimators 2. Figure 1 is a schematic top view of the X-ray backscattering safety inspection system and Figure 2 is a schematic perspective view of the X-ray backscattering safety inspection system according to the embodiment of the present disclosure.

In the embodiment, the X-ray source 1 may be a distributed X-ray source including a plurality of X-ray emitting target spots 101. The number of the target spots is not limited in any way.

The plurality of X-ray emitting target spots of the X-ray source 1 may be arranged in a linear manner. For example, preferably, the plurality of target spots of the X-ray source 1 may be arranged in a linear manner in vertical direction and each may be capable of individually emitting X-rays.

In the embodiment, each target spot of the X-ray source 1 is provided with a collimator 2 for modulating the X-ray emitted from the target spot. The collimators are arranged respectively in front of the target spots such that X-ray emitted from each target spot may be passed through a collimator and then outputted by the collimator as at least two pencil-type X-ray beams which are to be irradiated onto at least two locations of a vehicle 6 to be inspected.

In the embodiment, the system includes a plurality of detectors, which are configured to respectively receive scattering signals from the object to be inspected.

In the embodiment, the system may scan and inspect the object to be inspected by emitting X-ray in sequence or simultaneously by the plurality of target spots such that the object may be scanned by the two or more X-ray beams of the system (i.e., the object may be scanned twice or more times) by the X-ray beams of the system during a completed scanning period/operation.

When the pencil-shaped X-ray beams are irradiated onto the object to be inspected to perform the scanning and subsequent imaging, an image of the object to be inspected is formed on a screen based on the X-ray signals. The image of the object to be inspected is formed by the signals obtained during a completed scan. Although the signals from different locations of the object to be inspected in space are not continuous, an image on the screen may substantially reveal the whole profile of the object to be inspected, particularly display entrainments within the object to be inspected or different parts made by different material of the object to be inspected or different parts having different properties of the object to be inspected, thereby achieving the inspection on the object to be inspected, such as the inspections on hard drug, explosive goods, cutter, etc..

However, the inspection system based on X-ray imaging requires a profile image with a clear contrast, instead of an image with high resolution. A different matter within an object to be inspected may be inspected based on Compton Scattering effect, which is known by those skilled in the art. The detailed description of Compton Scattering effect is omitted here, although Compton Scattering effect relates to different scatterings of the X-rays onto different materials or matters, which is used to inspect different matters within the object to be inspected, such as hard drug, explosive goods and cutter, etc..

While the object to be inspected is moving during the inspection operation, the X-ray beams irradiated onto the object to be inspected are emitted in sequence, such as, from top to bottom, thereby the irradiated X-ray beams substantially scanning and covering the object to be inspected in whole. Alternatively, during the inspection, the X-ray beams irradiated onto the object to be inspected may be emitted in sequence from bottom to top. Still alternatively, the X-ray beams irradiated onto the object to be inspected may be emitted in sequence from middle. Still alternatively, the scan operation may not be performed in sequence. Those skilled in the art may choose a specific manner of the scanning as required.

According to an embodiment of the present disclosure, the system may be configured such that two target spots emit X-rays simultaneously. Alternatively, the system may be configured such that more than two target spots emit X-rays simultaneously at a moment and more than two target spots emit X-rays simultaneously at a next moment, thereby scanning the object to be inspected in sequence. The sequence of emitting the X-rays of the target spots may be determined as required.

Preferably, the system according to an embodiment of the present disclosure may be configured such that all the target spots emit X-ray beams simultaneously so as to emit at least two rows of X-ray beams on the object to be inspected at a moment.

As a collimator for outputting at least two pencil-shaped X-ray beams simultaneously is provided for each target spot, the object to be inspected may be scanned at least twice by irradiated two X-ray beams during one scan operation, and thus two or more scattering signals may be obtained.

In turn, after the obtained scattering signals having been processed, a clear image with higher contrast of the object to be inspected may be obtained with one scan operation, or, a higher scanning speed may be achieved (for obtaining an image with the same contrast), which is significant to practical application.

For example, when an object to be inspected is inspected by a conventional apparatus and moves in a high speed, an image with low contrast may be obtained because the apparatus emits only one X-ray beam and thus scans the object using the only one X-ray beam during a scan operation, to obtain only one set of data. In this way, due to relatively less scanning spots, the obtained image would have low contrast and the suspected matter would be left out. In order to maintain accuracy of the inspection, an object to be inspected, such as a vehicle, is required to move in relatively lower speed in a conventional inspection system, due to a reduced inspection speed.

According to an embodiment of the present disclosure, since at least two X-ray beams are emitted simultaneously, the obtained scattering signals are increased by a factor of 2 and thus the obtained image has a higher contrast, even if the object to be inspected would be moved in relatively higher speed. In other words, even though a vehicle moves in relatively higher speed, the system according to the present disclosure may be used to proceed the inspection for the vehicle. In case of inspecting an object to be inspected moving at relatively higher speed, an image obtained by the conventional apparatus is not clear very much while the one obtained by the system according to the present disclosure is clear enough.

For example, a system according to the present disclosure is provided with collimators each outputs two X-ray beams. During a scan operation on the object to be inspected, firstly, a collimator in a first row outputs two X-ray beams on two locations of the object to be inspected respectively, and in the next time of the object to be inspected, a collimator in a second row outputs two X-ray beams on another two locations, where are located below the locations corresponding to the collimator in a first row and being displaced backwards by a distance with respect to the movement direction of the object to be inspected, respectively. In this way, the locations of the object to be inspected are scanned and covered by the X-ray beams of the system according to the present disclosure. The scattering signals from the locations of the object to be inspected are integrated together to form an imaging for the object to be inspected. Compared with the conventional apparatus, the system according to the present disclosure inspects the object to be inspected in an increased speed and obtains an image with improved contrast.

It is noted that the inspection performance of the system according to the present disclosure may be improved substantially and/or the inspection speed may be highly increased by providing one collimator to achieve radiations of at least two X-ray beams onto the object to be inspected at one time, i.e., by scanning at least two times in one scan operation. In practice, smaller matter or foreign matter that cannot be inspected by the conventional apparatus can be inspected and displayed on a screen of the present system due to the multiple scanning operation and the enhanced scatter signals. That is, accuracy of the inspection in practice is increased. The present inspection system can achieve rapid inspection speed while maintaining higher accuracy.

In the system according to the disclosure, an object to be inspected moves at constant speed in a horizontal direction while a target spot of the X-ray source emits pencil-shaped X-ray beams 7, 8 to project on the object to be inspected. A controller 5 is provided to control the target spots to emit X-ray in sequence, forming a flying-spot scan in the vertical direction. The target spots of the X-ray source emit beams in relatively higher speed while the object translates in relatively lower speed. The slight deformation of the obtained image may be corrected by algorithm.

In this embodiment, the object passing through an inspection region at a constant speed is scanned completely by the two pencil-shaped X-ray beams 7, 8 respectively, obtaining two individual scattering signals and thus two sets of image data. By combining the movement speed and locations of the object to be inspected by means of the controller, the two sets of image data may be integrated to achieve an enhanced backscattering image of the object or an increased scanning speed.

According to the embodiment, the system further includes a controller 5 configured to control the target spots to individually emit in sequence and to control the respective detectors to receive corresponding scattering signals from the object to be inspected.

According to the embodiment, the controller is configured to process the scattering signals received by the detectors and integrate the scattering signals obtained from the scanning by the two pencil-shaped X-ray beams so as to produce an enhanced backscattering image or to increase a scanning speed.

When the object to be inspected passes through the inspection region at a constant speed, the controller 5 controls the source to emit two pencil-shaped X-ray beams 7, 8 such that the object is scanned completely by the two pencil-shaped X-ray beams 7, 8 respectively, obtaining two individual scattering signals and thus two sets of individual image data. Further, the controller 5 in the embodiment is configured to integrate the speed of the object to be inspected, locations of the object to be inspected and the two sets of individual image data to achieve an enhanced backscattering image of the object to be inspected or an increased scanning speed.

In the embodiment, preferably, the collimators are arranged such that the two pencil-shaped X-ray beams 7, 8 emitted by the collimator are arranged in a horizontal plane and are irradiated in a horizontal direction on two locations of the vehicle 6 to be inspected. Accordingly, the detectors may include correspondingly two detectors 3 and 4.

In the system according to the embodiment of the present disclosure, preferably, an angle between the pencil-shaped X-ray beams 7 and 8 is configured to be a suitable angle as required. For example, the angle between the X-ray beams 7 and 8 may be smaller than 180 degree, or smaller than 160 degree, or smaller than 150 degree, or smaller than 140 degree, or smaller than 130 degree, or smaller than 120 degree, or smaller than 110 degree, or smaller than 100 degree, or smaller than 90 degree, or smaller than 80 degree, or smaller than 70 degree, or smaller than 60 degree. The angle between the X-ray beams 7 and 8 may be greater than 10 degree, or greater than 20 degree, or greater than 30 degree, or greater than 40 degree, or greater than 50 degree, or greater than 60 degree, or greater than 70 degree. For example, the angle between the X-ray beams 7 and 8 is configured to be 60 degree such that the detectors 3 and 4 may receive scattering signals simultaneously with no crosstalk or negligible crosstalk. Based on the embodiments of the present disclosure, it is feasible to determine a suitable angle between the X-ray beams 7 and 8 as required. In practice, as the volume of the object to be inspected is variously changeable and thus a distance between the surface of the object to be inspected and the target spots/collimator is changeable, the angle thus may be adjustable as required.

The angle between the X-ray beams 7 and 8 may be determined depending on a flare angle of the target spot 101 and the distance between the system and the object to be inspected. As the detectors are located at the same side as the X-ray source, an angle between a scattering X-ray beam received by the detectors and the corresponding emitted X-ray beam is greater than 90 degree. The process thus belongs to Compton Backscattering process.

In an embodiment, more than two X-ray beams may be emitted and the angles between these beams are disposed depending on actual situations. For example, in addition to the two X-ray beams in a horizontal plane, an X-ray beam emitted upwards obliquely is added, thereby adding a third or even fourth X-ray beam. The third X-ray beam is angled to the horizontal plane at an acute angle so as to obtain a Compton Backscattering X-ray beam other than the X-ray beam in the horizontal plane.

In the embodiment, the obtained scattering signals are processed as digital signals by the controller of a computer for displaying.

In this instance, the vehicle 6 may be scanned by the back-scattering X-ray beams at least two times during one scan operation of the inspection system, which is favor of succeeding image enhancing process and results a better image based on back-scattering signals or increases a speed of the vehicle and thus reduces time for a completed scanning.

According to an embodiment of the present disclosure, there is provided an X-ray backscattering passage-typed safety inspection system comprising a plurality of transmit-receive modules. In the system of this embodiment, the transmit-receive module includes an X-ray source 1, detectors 3 and 4, a collimator 2 and a controller 5. A plurality of transmit-receive modules are configured to form an section region. The number of the transmit-receive modules and the arrangement thereof may be determined as required.

For example, an X-ray backscattering passage-typed safety inspection system according to an embodiment of the present disclosure includes two transmit-receive modules. The two transmit-receive modules are located at either side of an object to be inspected. The two modules are configured to simultaneously emit X-ray beams from opposite directions. In a vertical cross-section plane (which is perpendicular to a movement direction of the object to be inspected) with respect to the movement direction of the object, the modules at either side of the object simultaneously emit X-rays in sequence in clockwise manner or in counter-clockwise manner around the periphery of the object to be inspected, thereby achieving a completed scan on the object to be inspected and increasing a scanning speed. The system including two transmit-receive modules has a scanning speed greater than a system including only one transmit-receive module by a factor of 2.

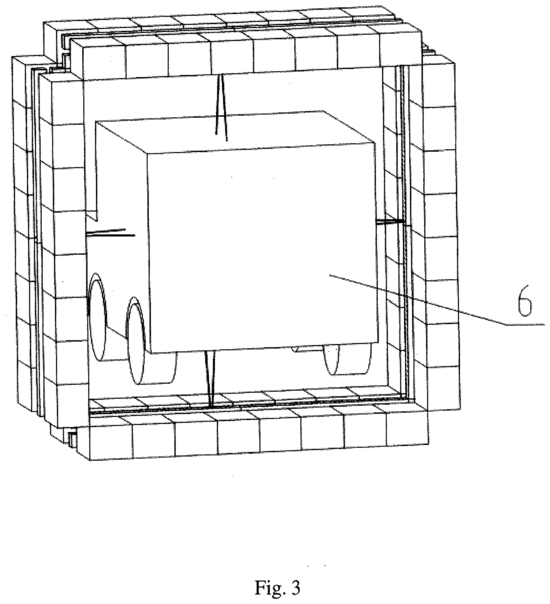

Furthermore, as shown in Figure 3, the inspection system includes four transmit-receive modules, which may be arranged in a passage structure so as to achieve a rapid completed backscattering scanning from right side, left side, top side and bottom side of a vehicle at one time. When a vehicle 6 is passing at a constant speed through the inspection region, a signal from the controller 5 or an external signal is provided to control the target spots of each module of the system to emit X-rays in sequence in clockwise manner or in counter-clockwise manner (with respect to the plane of Figure 3) around the periphery of the vehicle 6. The system comprises detectors to receive scattering signals.

The system according to the embodiment of the present invention may achieve two scanning operations for a vehicle 6 through one scan period of the target spots around the vehicle. With such scan period by the system, two "sections" of the backscattering image of the vehicle may be obtained. After the scanning operations, the system integrates and processes the scattering signals and the movement speed of the vehicle to integrate scattering signals of locations of the object to be inspected and produces an image of the object with an improved contrast.

In the example shown in Figure 3, the module at left side emits X-ray in sequence from down to up while the module at right side emits X-ray in sequence from up to down. Meanwhile, the detectors correspondingly receive scattering signals respectively and output signals for the imaging purpose. The modules at top side and at bottom side operate in the same way (, but operate in reverse sequence). At this way, the four modules are cooperated to achieve a completed scanning of an object to be inspected in a scanning period of each module. That is, a completed scan operation can be done in an one-fourth of a period time with relative to a conventional system including one module. Thus, the scanning speed of the passage-typed inspection system is effectively increased. Other types of passage-typed inspection system may be provided to include any number of transmit-receive modules, which may be obtained based on the above and the description thereto is omitted here.

According to an example which is not part of the invention, an inspection system may include two "L"-shaped transmit-receive modules. The two "L"-shaped transmit-receive modules are configured to a quadrilateral to surround an object to be inspected. Alternatively, two "L"-shaped transmit-receive modules may be configured to surround an object to be inspected from three sides.

According to an exemplary operation of the passage-typed safety inspection system, when a vehicle 6 is passing through an inspection region at a constant speed, the system is activated. The controller 5 controls the target spots of each module of the system to emit X-ray beams in sequence along the linear array of the target spots to scan the vehicle from all around. The controller 5 also controls the corresponding detectors to collect and process backscattering signals from the vehicle depending on the emitting sequence of the target spots.

When the vehicle 6 has passed through the inspection region, the right side, left side, top side and bottom side of the vehicle have been scanned completely twice or more times by the X-ray beams. An image of the vehicle is displayed by processing the backscattering signals.

The inspection system according to embodiments of the present disclosure advantageously includes a backscattering inspection system with a distributed X-ray source, which effectively reduces space requirement of installation, expands scanning region of a vehicle, largely simplifies mechanical structure for spot-flying X-ray and further enhances quality of the scanning image.

The inspection system according to embodiments of the present disclosure may simultaneously obtain a plurality of "sections" of a backscattering image of a vehicle after a scanning operation by providing collimators that may produce two or more X-ray beams in horizontal direction for each target spot. In a scanning operation, the scanning on the vehicle by the multiple X-ray beams (i.e., scanning the vehicle multiple times) is in favor of subsequent image enhancing process and thus improves uniformity and clarity of the scanning image.

The passage-typed backscattering inspection system with a distributed X-ray source according to embodiments of the present disclosure is provided with two arrays of modules faced to each other and emitting X-ray beams in sequence in clockwise manner or in counter-clockwise manner and is also provided with detectors that collect backscattering signals for imaging, thereby effectively improving scanning speed and reducing scanning time.

Although several exemplary embodiments have been shown and described, it would be appreciated by those skilled in the art that various changes or modifications may be made in these embodiments without departing from the scope of the present invention, which is defined in the claims.

## Claims

1. An X-ray backscattering passage-typed safety inspection system, comprising:
a passage through which an object (6) to be inspected passes;
one or more transmit-receive modules disposed at a or either side of the passage, the one or more transmit-receive modules being arranged to define an inspection region and each of the one or more transmit-receive modules comprising:
an X-ray source (1) comprising a plurality of target spots (101) each individually controllable to emit X-rays;
a collimator (2) for each target spot (101) configured to modulate the X-ray emitted from the respective target spot (101) and output N pencil-shaped X-ray beams (7, 8), the N pencil-shaped X-ray beams (7, 8) being configured to be irradiated onto N locations of an object (6) to be inspected; and
a detector (3, 4) for each of the N pencil-shaped X-ray beam (7, 8) configured to respectively receive scattering signals from the corresponding locations of the object (6) to be inspected, in which N is a positive integer that is great than or equal to 2.

2. The X-ray backscattering passage-typed safety inspection system according to claim 1, wherein,
at least one transmit-receive module of the one or more transmit-receive modules is configured to scan the object (6) to be inspected by emitting X-rays in sequence or simultaneously from the plurality of target spots (101), wherein N scans on the object (6) to be inspected are configured to be performed by irradiating the N pencil-shaped X-ray beams from the respective collimators (2) onto the object (6) to be inspected during a scan period.

3. The X-ray backscattering passage-typed safety inspection system according to claim 1, further comprising,
a controller (5) configured to control the target spots (101) to emit X-rays individually in sequence and control the corresponding detectors to receive the scattering signals from the object (6) to be inspected.

4. The X-ray backscattering passage-typed safety inspection system according to claim 3, wherein,
the controller (5) is configured to process the scattering signal received by the detector (3, 4) and integrate the results of the N scans on the object (6) to be inspected.

5. The X-ray backscattering passage-typed safety inspection system according to claim 1, wherein,
the collimator (2) is configured such that at least two pencil-shaped X-ray beams are arranged in a plane, wherein an angle between the at least two pencil-shaped X-ray beams (7, 8) is ranged from 10 degree to 150 degree such that the detectors (3, 4) receive the corresponding scattering signals simultaneously with no crosstalk or negligible crosstalk.

6. The X-ray backscattering passage-typed safety inspection system according to claim 1, wherein,
the system comprises two transmit-receive modules located at either side of the object to be inspected and cooperated with each other to simultaneously scan respective halves of the object (6) to be inspected in a vertical cross-section plane with respect to the object (6) to be inspected by emitting X-ray beams in sequence in clockwise manner or in counter-clockwise manner around the periphery of the object (6) to be inspected, and collect and integrate scattering signals so as to form a backscattering image for the object (6) to be inspected.

7. The X-ray backscattering passage-typed safety inspection system according to claim 1, wherein,
the system comprises four transmit-receive modules respectively located at top side, bottom side, right side and left side of the object (6) to be inspected and cooperated with each other to simultaneously scan respective parts of the object to be inspected, and collect and integrate scattering signals so as to form a backscattering image for the object (6) to be inspected.

8. An X-ray backscattering safety inspection method, comprising:
inspecting an object (6) to be inspected by using the system according to claim 6.

## Patentansprüche

1. Röntgenstrahlrückstreuungs-Durchgangsinspektionssystem, umfassend:
einen Durchgang, durch den ein zu inspizierendes Objekt (6) hindurch verläuft;
ein oder mehrere Sende-Empfangs-Module, die auf einer oder beiden Seiten des Durchgangs angeordnet sind, wobei das eine oder die mehreren Sende-Empfangs-Module so angeordnet sind, dass sie eine Inspektionsregion definieren, und jedes der einen oder mehreren Sende-Empfangs-Module Folgendes umfasst:
eine Röntgenquelle (1), die mehrere Zielpunkte (101) umfasst, die jeweils individuell gesteuert werden können, um Röntgenstrahlen auszusenden;
einen Kollimator (2) für jeden Zielpunkt (101), der dafür ausgestaltet ist, den Röntgenstrahl, der von dem jeweiligen Zielpunkt (101) ausgesendet wird, zu modulieren und N bleistiftförmige Röntgenstrahlen (7, 8) auszugeben, wobei die N bleistiftförmigen Röntgenstrahlen (7, 8) dafür ausgestaltet sind, auf N Stellen eines zu inspizierenden Objekts (6) aufgestrahlt zu werden; und
einen Detektor (3, 4) für jeden der N bleistiftförmigen Röntgenstrahlen (7, 8), der dafür ausgestaltet ist, jeweils Streuungssignale von den entsprechenden Stellen des zu inspizierenden Objekts (6) zu empfangen, wobei N eine positive ganze Zahl von mindestens 2 ist.

2. Röntgenstrahlrückstreuungs-Durchgangsinspektionssystem nach Anspruch 1, wobei mindestens ein Sende-Empfangs-Modul des einen oder der mehreren Sende-Empfangs-Module dafür ausgestaltet ist, das zu inspizierende Objekt (6) abzutasten, indem Röntgenstrahlen nacheinander oder gleichzeitig von den mehreren Zielpunkten (101) ausgesendet werden, wobei N Abtastungen auf dem zu inspizierenden Objekt (6) dafür ausgestaltet sind, ausgeführt zu werden, indem die N bleistiftförmigen Röntgenstrahlen während eines Abtastzeitraums von den jeweiligen Kollimatoren (2) auf das zu inspizierenden Objekt (6) aufgestrahlt werden.

3. Röntgenstrahlrückstreuungs-Durchgangsinspektionssystem nach Anspruch 1, das des Weiteren eine Steuereinheit (5) umfasst, die dafür ausgestaltet ist, die Zielpunkte (101) zu steuern, um Röntgenstrahlen einzeln nacheinander auszusenden, und die entsprechenden Detektoren zu steuern, um die Streuungssignale von dem zu inspizierenden Objekt (6) zu empfangen.

4. Röntgenstrahlrückstreuungs-Durchgangsinspektionssystem nach Anspruch 3, wobei die Steuereinheit (5) dafür ausgestaltet ist, das durch den Detektor (3, 4) empfangene Streuungssignal zu verarbeiten und die Ergebnisse der N Abtastungen auf dem zu inspizierenden Objekt (6) zu integrieren.

5. Röntgenstrahlrückstreuungs-Durchgangsinspektionssystem nach Anspruch 1, wobei der Kollimator (2) so ausgestaltet ist, dass mindestens zwei bleistiftförmige Röntgenstrahlen in einer Ebene angeordnet sind, wobei ein Winkel zwischen den mindestens zwei bleistiftförmigen Röntgenstrahlen (7, 8) im Bereich von 10 Grad bis 150 Grad liegt, dergestalt, dass die Detektoren (3, 4) die entsprechenden Streuungssignale gleichzeitig ohne Übersprechen oder mit vernachlässigbarem Übersprechen empfangen.

6. Röntgenstrahlrückstreuungs-Durchgangsinspektionssystem nach Anspruch 1, wobei das System zwei Sende-Empfangs-Module umfasst, die sich auf jeder Seite des zu inspizierenden Objekts befinden und miteinander zusammenwirken, um jeweilige Hälften des zu inspizierenden Objekts (6) in einer vertikalen Querschnittsebene mit Bezug auf das zu inspizierende Objekt (6) gleichzeitig abzutasten, indem Röntgenstrahlen nacheinander im Uhrzeigersinn oder entgegen dem Uhrzeigersinn um den Umfang des zu inspizierenden Objekts (6) herum ausgesendet werden, und Streuungssignale so erfasst und integriert werden, dass ein Rückstreuungsbild für das zu inspizierende Objekt (6) gebildet wird.

7. Röntgenstrahlrückstreuungs-Durchgangsinspektionssystem nach Anspruch 1, wobei das System vier Sende-Empfangs-Module umfasst, die an der Oberseite, der Unterseite, der rechten Seite bzw. der linken Seite des zu inspizierenden Objekts (6) angeordnet sind und miteinander zusammenwirken, um gleichzeitig jeweilige Teile zu inspizierenden des Objekts abzutasten, und Streuungssignale so erfasst und integriert werden, dass ein Rückstreuungsbild für das zu inspizierende Objekt (6) gebildet wird.

8. Röntgenstrahlrückstreuungs-Sicherheitsinspektionsverfahren, umfassend:
Inspizieren eines zu inspizierenden Objekts (6) unter Verwendung des Systems nach Anspruch 6.

## Revendications

1. Système d'inspection de sécurité du type à passage à rétrodiffusion de rayons X, comprenant :
un passage à travers lequel passe un objet (6) à inspecter ;
un ou plusieurs module(s) d'émission-réception, disposé(s) d'un ou de chaque côté du passage, le(s) module(s) d'émission-réception étant placé(s) pour définir une région d'inspection et le module ou chacun des modules d'émission-réception comprenant :
une source de rayons X (1) comprenant une pluralité de points cibles (101) pouvant être commandés chacun individuellement pour émettre des rayons X ;
un collimateur (2) pour chaque point cible (101), conçu pour moduler le rayon X émis à partir du point cible respectif (101) et délivrer N faisceaux de rayons X en forme de crayon (7, 8), les N faisceaux de rayons X en forme de crayon (7, 8) étant conçus pour être émis vers N emplacements d'un objet (6) à inspecter ; et
un détecteur (3, 4) pour chacun des N faisceaux de rayons X en forme de crayon (7, 8), conçu pour recevoir respectivement des signaux de diffusion en provenance des emplacements correspondants de l'objet (6) à inspecter, dans lequel N est un entier positif qui est supérieur ou égal à 2.

2. Système d'inspection de sécurité du type à passage à rétrodiffusion de rayons X, selon la revendication 1, dans lequel :
au moins un module d'émission-réception du ou des module(s) d'émission-réception est conçu pour balayer l'objet (6) à inspecter en émettant des rayons X de manière séquentielle ou simultanée, à partir de la pluralité de points cibles (101), dans lequel N balayages de l'objet (6) à inspecter sont destinés à être réalisés par émission des N faisceaux de rayons X en forme de crayon à partir des collimateurs respectifs (2) vers l'objet (6) à inspecter au cours d'une période de balayage.

3. Système d'inspection de sécurité du type à passage à rétrodiffusion de rayons X, selon la revendication 1, comprenant en outre :
un dispositif de commande (5) conçu pour commander les points cibles (101) afin d'émettre des rayons X individuellement, de manière séquentielle et pour commander les détecteurs correspondants afin de recevoir les signaux de diffusion en provenance de l'objet (6) à inspecter.

4. Système d'inspection de sécurité du type à passage à rétrodiffusion de rayons X, selon la revendication 3, dans lequel :
le dispositif de commande (5) est conçu pour traiter le signal de diffusion reçu par le détecteur (3, 4) et intégrer les résultats des N balayages de l'objet (6) à inspecter.

5. Système d'inspection de sécurité du type à passage à rétrodiffusion de rayons X, selon la revendication 1, dans lequel :
le collimateur (2) est conçu de manière qu'au moins deux faisceaux de rayons X en forme de crayon soient placés dans un plan, dans lequel un angle entre les deux faisceaux de rayons X en forme de crayon ou davantage (7, 8) est compris dans la plage de 10 degrés à 150 degrés, de sorte que les détecteurs (3, 4) reçoivent les signaux de diffusion correspondants simultanément, sans intermodulation ou avec une intermodulation négligeable.

6. Système d'inspection de sécurité du type à passage à rétrodiffusion de rayons X, selon la revendication 1, dans lequel :
le système comprend deux modules d'émission-réception situés de chaque côté de l'objet à inspecter et coopérant l'un avec l'autre pour balayer simultanément des moitiés respectives de l'objet (6) à inspecter, dans un plan de coupe verticale par rapport à l'objet (6) à inspecter en émettant des faisceaux de rayons X de manière séquentielle, dans le sens des aiguilles d'une montre ou dans le sens contraire des aiguilles d'une montre autour de la périphérie de l'objet (6) à inspecter, et pour recueillir et intégrer des signaux de diffusion de façon à former une image de rétrodiffusion pour l'objet (6) à inspecter.

7. Système d'inspection de sécurité du type à passage à rétrodiffusion de rayons X, selon la revendication 1, dans lequel :
le système comprend quatre modules d'émission-réception situés respectivement du côté supérieur, du côté inférieur, du côté droit et du côté gauche de l'objet (6) à inspecter et coopérant les uns avec les autres pour balayer simultanément des parties respectives de l'objet à inspecter, et pour recueillir et intégrer des signaux de diffusion de façon à former une image de rétrodiffusion pour l'objet (6) à inspecter.

8. Procédé d'inspection de sécurité par rétrodiffusion de rayons X, comprenant l'étape suivante :
inspecter un objet (6) à inspecter, au moyen du système selon la revendication 6.
